# EUROPÄISCHE PATENTANMELDUNG

(11) **EP 4 249 451 A1**
(43) Veröffentlichungstag der Anmeldung: **27.09.2023**
(21) Anmeldenummer: 22163349.8
(22) Anmeldetag: 21.03.2022
(51) Int. Cl.: C04B 35/597, B23B 27/00, C04B 35/626, C04B 35/645

(54) **KERAMISCHER SINTERFORMKÖRPER AUS EINEM SIALON-WERKSTOFF, SEINE ROHSTOFFMISCHUNG UND HERSTELLUNG**

(71) Anmelder: CeramTec GmbH, 73207 Plochingen (DE)
(72) Erfinder: Dietrich, Volker, 68623 Lampertheim (DE); Nemrava, Sandra, 73779 Deizisau (DE); Stahl, Moritz, 72622 Nürtingen (DE)

(57) **Zusammenfassung**

Die vorliegende Erfindung betrifft einen Sinterformkörper auf Basis von β-Sialon sowie 15R-Sialon, der als Schneidwerkstoff eine hohe Schneidperformance ggü. Werkstücken aus Nickel-Basis-Legierung oder Heat Resistant Super Alloys (HRSA) aufweist. Dazu wird ein keramischer Sinterformkörper gezeigt, der eine Sialon-Phase und eine amorphe oder teilkristalline Korngrenzphase aufweist. Die Sialon-Phase weist einen Anteil von 20 - 80 Gew.-% 15R-Sialon-Polytypoid auf. Die amorphe oder teilkristalline Korngrenzphase umfasst ggf. einen Yb-AI-Granat, und macht bis zu 15 Gew.-% des gesamten Sinterformkörpers aus. Der Sinterformkörper wird aus einer anorganischen Rohstoffmischung hergestellt, die 40 bis 57 Gew.-% Si₃N₄; 40 - 55 Gew.-% eines Gemischs aus AIN und Al₂O₃, wobei das Verhältnis von Al₂O₃ zu AIN im Bereich 1 - 1,5:1 liegt, und 3 bis 5 Gew.-% Yb₂O₃ als Sinterhilfsmittel umfasst.

## Beschreibung

Gegenstand der Erfindung ist ein Sialon-Werkstoff, dessen Sialonphase β-Sialon und 15R-Sialon-Polytypoid umfasst. Der Sialon-Werkstoff umfasst weiterhin eine amorphe oder teilkristalline Korngrenzphase.

Gesinterte Sialone sind bekannte, chemisch stabile Materialien mit einer hohen mechanischen Festigkeit über einen breiten Temperaturbereich. Sialone werden daher als hitzeresistente Teile in Maschinen eingesetzt. Die hohe mechanische Festigkeit führt zu einem geringen Verschleiß bei abriebsintensiven Prozessen. Einen breiten Einsatz finden Sialone daher als Schneidmittel in Schneidwerkzeugen.

Sinterformkörper aus α/β-Sialon, insbesondere zur Verwendung als Schneidwerkzeug, z. B. als Schneidmittel, sind aus dem Stand der Technik bekannt. Die Mischungen aus α-Sialon und β-Sialon ermöglichen die Herstellung von Sinterformkörpern, die einerseits eine hohe Härte aufgrund des körnigen α-Sialons aufweisen und andererseits auch über eine gute Zähigkeit aufgrund der nadelförmigen β-Sialon-Körner verfügen.

Die Aufgabe der Erfindung besteht darin, einen Sialon-Sinterformkörper bereitzustellen, der eine hohe chemische Beständigkeit, eine hohe Härte und eine gute Bruchzähigkeit aufweist. Hauptsächlich soll der Sinterformkörper Einsatz bei der spanenden Bearbeitung von Nickel-Basis-Legierungen oder Heat Resistant Super Alloys (HRSA) finden. Außerdem soll ein Verfahren zur Herstellung eines Sialon-Sinterformkörpers bereitgestellt werden und die zugrundeliegende anorganische Rohstoffmischung.

Die Aufgabe wird durch eine anorganische Rohstoffmischung gemäß Anspruch 1, einen Sialon-Sinterformkörper gemäß Anspruch 6, das Verfahren gemäß Anspruch 10 sowie die Verwendung gemäß Anspruch 14 gelöst. Die untergeordneten Ansprüche geben bevorzugte Ausgestaltungen wieder. Weitere bevorzugte Ausgestaltungen sind nachfolgend beschrieben. Ausgestaltungen können untereinander frei kombiniert werden.

Sämtliche Prozentangaben beziehen sich, wenn nicht anders angegeben, auf das Gewicht (Gew.-%).

Sämtliche Angaben in mol-% beziehen sich, wenn nicht anders angegeben, auf die Gesamtmischung.

Sämtliche Bestandteile des Sialon-Sinterformkörpers und auch der anorganischen Rohstoffmischung können Verunreinigungen aufweisen. Die Reinheit der Ausgangsmaterialien beträgt mindestens ≥ 97%, d.h. jedes Ausgangsmaterial kann bis zu 3 Gew.-% Verunreinigungen aufweisen (bezogen auf die Gesamtmenge des jeweiligen Ausgangsmaterials). Bevorzugt beträgt die Reinheit der Ausgangsmaterialien ≥ 99 %, d.h. bis zu 1 Gew.-% Verunreinigungen (bezogen auf die Gesamtmenge des jeweiligen Ausgangsmaterials) sind möglich, besonders bevorzugt beträgt die Reinheit ≥ 99,7 %, d.h. bis zu 0,3 Gew.-% Verunreinigungen (bezogen auf die Gesamtmenge des jeweiligen Ausgangsmaterials) sind möglich. Im Idealfall ist die Reinheit der Ausgangsmaterialien ≥ 99,9 %, d.h. es liegen nahezu keine Verunreinigungen vor (bis zu 0,1 Gew.-%).

Bevorzugt handelt es sich bei den Verunreinigungen um Fremdmetalle in Mengen von jeweils weniger als 1000 ppm. Weiterhin können die Bestandteile der Rohstoffmischungen Sauerstoff in Mengen von weniger als 1,5 Gew.-%, bevorzugt weniger als 1 Gew.-%, besonders bevorzugt weniger als 0,7 Gew.-% bezogen auf die Gesamtmenge des jeweiligen Ausgangsstoffs aufweisen.

Die Korngrößen der Bestandteile des Sialons im gesinterten Sinterformkörper werden mittels REM-Aufnahmen bestimmt. Die maximale Nadellänge, d.h. die maximale Ausdehnung der Körner sollte 100 µm nicht überschreiten. Die Bestimmung der Zusammensetzung des Sialon-Sinterformkörpers erfolgt mittels herkömmlichen röntgenographischen Analyseverfahren, beispielsweise XRD (DIN EN 13925-1 (2003-07) und DIN 13925-2 (2003-07)). Chemische Analysen des erfindungsgemäßen Sinterformkörpers erfolgen durch energiedispersive Röntgenanalyse (ISO 15632; DIN EN 1071-4) und Röntgenfluoreszenzanalyse (RFA; DIN 51001 (2003-08), DIN 51418-1 (2010-05), DIN 51418-2 (2015-03)).

Sialone werden typischerweise durch Sintern einer pulverförmigen Mischung hergestellt und bestehen hauptsächlich aus Siliziumnitrid, Aluminiumoxid und weiteren anorganischen Ausgangsmaterialien, wie z. B. Sinterhilfsmitteln. Der Sinterformkörper, d.h. der Werkstoff, der gesinterte Körper aus den Ausgangsmaterialien, umfasst eine Sialon-Phase und eine amorphe oder zumindest teilkristalline Korngrenzphase. Die Sialon-Phase umfasst β (beta) - Sialon (Si_{6-Z}Al_{Z}O_{Z}N_{8-Z} wobei 0 < Z ≤ 4.2) und 15R-Sialon-Polytypoid (SiAl₄O₂N₄). Der Anteil an 15R-Sialon-Polytypoid beträgt 20 - 80 Gew.-%, bevorzugt 30 - 70 Gew.-%, besonders bevorzugt 40 - 60 Gew.-% bezogen auf das Gesamtgewicht der Sialon-Phase. Der Anteil an β-Sialon beträgt bevorzugt mindestens 10 Gew.-%, besonders bevorzugt mindestens 35 Gew.-%. Insbesondere bevorzugt ist ein Anteil an β-Sialon von 40 Gew.-%. Der Anteil an β-Sialon beträgt maximal 80 Gew.-%.

Der Anteil an 15R-Polytypoid führt zu einem Sinterformkörper, der eine hohe chemische Inertheit aufweist, d.h. chemische Reaktionen mit dem bzw. am Sinterformkörper werden durch einen hohen Anteil an 15R-Polytypoid vermieden. Allerdings führt ein hoher Anteil an 15R-Polytypoid zu einer hohen Sprödigkeit des Sinterformkörpers. Im Bereich von 40 bis 60 Gew.-% 15R kann ein optimales Verhältnis von chemischer Inertheit zu Bruchzähigkeit des Sinterformkörpers erhalten werden.

Die Nachweisgrenze beim röntgenographischen Analyseverfahren zur Bestimmung der Zusammensetzung der Sialon-Phase und zur Ermittlung der im Sinterformkörper vorliegenden einzelnen Sialone liegt bei ca. 5 Gew.-%. Es können bis zu 10, bevorzugt bis zu 5 Gew.-% weitere Sialone, bevorzugt ausgewählt aus der Liste umfassend α (alpha) -, 12H-, 21Rund/oder 27R-Sialon in der Sialon-Phase enthalten sein.

Der Sinterformkörper besteht dabei zu ≥ 80 Gew.-%, bevorzugt zu ≥ 85 Gew.-% aus der Sialon-Phase und zu bis zu 20 Gew.-%, bevorzugt zu bis zu 15 Gew.-% aus der amorphen oder zumindest teilkristallinen Korngrenzphase, bezogen auf das Gesamtgewicht des Sinterformkörpers. Besonders bevorzugt besteht der Sinterformkörper zu ≥ 90 Gew.-% aus der Sialon-Phase.

Bevorzugt ist der Anteil an Korngrenzphase am Gesamtgewicht des Sinterformkörpers ≤ 12 Gew.-%, besonders bevorzugt ≤ 10 Gew.-%. In einer bevorzugten Ausgestaltung besteht der Sinterformkörper aus der Sialon-Phase und der Korngrenzphase, d.h. die Summe der Anteile der Sialon-Phase und der Korngrenzphase ergibt 100 Gew.-%. Um einen möglichst dichten Sinterformkörper herstellen zu können, werden z. B. Sinterhilfsmittel als Additive zugegeben. Die Menge der zugesetzten Additive beeinflusst die Menge an Korngrenzphase. In einer bevorzugten Ausgestaltung beträgt der Anteil an Korngrenzphase mindestens 5 Gew.-%.

Der erfindungsgemäße Sinterformkörper entsteht durch Wärmebehandlung, dem Sintern, einer Ausgangsstoffmischung. Diese Ausgangsstoffmischung umfasst eine anorganische Rohstoffmischung und organische Bestandteile. Eine anorganische Rohstoffmischung zur Herstellung von Sialonen umfasst die Bestandteile Si₃N₄, AIN, Al₂O₃ sowie Sinterhilfsmittel.

Zur Herstellung des erfindungsgemäßen Sinterformkörpers wird eine anorganische Rohstoffmischung vorgeschlagen, der Yb₂O₃ als Sinterhilfsmittel zugesetzt wird.

Der erfindungsgemäße Sinterformkörper, das Sialon, wird aus einer anorganischen Rohstoffmischung erhalten, welche folgende Bestandteile umfasst:
- 40 - 57 Gew.-% Si₃N₄
- 40 - 55 Gew.-% eines Gemischs aus AIN und Al₂O₃, wobei das Verhältnis von Al₂O₃ zu AIN im Bereich 1 - 1,5:1, bevorzugt 1 - 1,25:1, besonders bevorzugt 1 - 1,2:1 liegt,
- 3 - 5 Gew.-% Yb₂O₃ als Sinterhilfsmittel.

In einer bevorzugten Ausgestaltung beträgt die Summe der anorganischen Bestandteile 100 Gew.-% und die anorganische Rohstoffmischung besteht lediglich aus den Bestandteilen Si₃N₄, AIN, Al₂O₃ sowie Yb₂O₃ als Sinterhilfsmittel.

Die anorganische Rohstoffmischung umfasst alle anorganischen Bestandteile, die zur Herstellung des erfindungsgemäßen Sinterformkörpers eingesetzt werden. Um den Sinterformkörper herzustellen, werden weitere organische Bestandteile hinzugefügt, wie z. B. Dispergatoren, Presshilfsmittel und Binder, die während der Wärmebehandlung, dem Entbindern und Sintern vollständig verbrannt werden. Diese organischen Bestandteile enthalten bevorzugt keine metallischen Komponenten. So werden in einer bevorzugten Ausgestaltung Ammoniumsalze anstelle von Natriumsalzen der organischen Bestandteile verwendet.

In einer bevorzugten Ausgestaltung umfasst die erfindungsgemäße anorganische Rohstoffmischung
- 45 - 54,5 Gew.-% Si₃N₄,
- 42 - 50 Gew.-% eines Gemischs aus AIN und Al₂O₃, wobei das Verhältnis von Al₂O₃ zu AIN im Bereich 1 - 1,5:1, bevorzugt 1 - 1,25:1, besonders bevorzugt 1 - 1,15:1 liegt.
- 3,5 - 5 Gew.-% Yb₂O₃.

In einer bevorzugten Ausgestaltung beträgt die Summe der anorganischen Bestandteile 100 Gew.-%.

In einer besonders bevorzugten Ausgestaltung umfasst die erfindungsgemäße anorganische Rohstoffmischung
- 47,5 - 51,5 Gew.-% Si₃N₄,
- 45 - 48 Gew.-% eines Gemischs aus AIN und Al₂O₃, wobei das Verhältnis von Al₂O₃ zu AIN im Bereich 1 - 1,5:1, bevorzugt 1 - 1,25:1, besonders bevorzugt 1 - 1,2:1 liegt.
- 3,5 - 4,5 Gew.-% Yb₂O₃.

In einer bevorzugten Ausgestaltung beträgt die Summe der anorganischen Bestandteile 100 Gew.-%.

Die Rohstoffmischung umfasst Yb₂O₃ als Sinterhilfsmittel, welches dazu dient, hochdichte Keramiken zu erzeugen. Bei der Verwendung von mehr als 5 Gew.-% Yb₂O₃ bezogen auf den gesamten Sinterformkörper verringert sich die Wärmebeständigkeit, die Zähigkeit und die Härte des Sialon-Sinterkörpers. In einer Ausgestaltung beträgt der Anteil an Yb₂O₃ in Bezug auf die erfindungsgemäße anorganische Rohstoffmischung 0,4 - 1,5 mol.-%, bevorzugt 0,6-1,5 mol.-% und besonders bevorzugt 0,6 - 1 mol.-%.

Der Sinterformkörper wird aus der erfindungsgemäßen anorganischen Rohstoffmischung hergestellt. Dazu wird zunächst die anorganische Rohstoffmischung bereitgestellt. Es werden ein oder mehrere organische Hilfsstoffe hinzugegeben.

Die Rohstoffe werden zunächst in einem Lösungsmittel gemischt und/oder gemahlen. Das Lösungsmittel ist in einer Ausgestaltung Wasser. In einer weiteren Ausgestaltung ist das Lösungsmittel ein organisches Lösungsmittel, ein Gemisch mehrerer organischer Lösungsmittel oder ein Gemisch aus einem oder mehreren organischen Lösungsmitteln und Wasser. Bevorzugt sind die Lösungsmittelgemische einphasig, d.h. die Lösungsmittel lösen sich in den benötigten Mengen vollständig ineinander.

Die pulverförmige anorganische Rohstoffmischung sollte Partikel mit einer durchschnittlichen Partikelgröße von 10 µm oder weniger, vorzugsweise 5 µm oder weniger, bevorzugter 3 µm oder weniger umfassen. Die anorganische Rohstoffmischung wird bevorzugt in eine Misch- und Mahlmaschine, wie eine Kugelmühle oder eine Si₃N₄-Topfmühle, mit Si₃N₄-Mahlkugeln gegeben und dem Material wird ein Lösungsmittel zugesetzt, welches das pulverförmige Rohmaterial nicht, zumindest im Wesentlichen nicht, löst. Die Korngrößen der Rohstoffmischung werden je nach Bearbeitungsschritt als Agglomerate oder Primärpartikel bezeichnet. Die Bestimmung des D50-Werts der Primärpartikel, der gemahlenen Rohstoffe, erfolgt mittels Centrifugal Sedimentation mittels Particle Distribution Analyzer (DIN EN 725-5:2007, ISO 13320:2020-01).

Dann wird die Mischung gemahlen und so lang gemischt, dass eine Aufschlämmung entsteht und die angestrebte Primärkorngröße, d.h. die Korngröße des Rohstoffs nach der Mahlung und vor der Formgebung, eingestellt wurde. Der Misch- und Mahlprozess dauert üblicherweise mindestens 5 min, bevorzugt 30 min, besonders bevorzugt 1 h bis maximal 300 h, bevorzugt maximal 200 h, besonders bevorzugt maximal 100 h.

Das Si₃N₄-Pulver weist in einer Ausgestaltung eine Primärkorngröße D50 0,25 ≤ 1,8 µm, bevorzugt D50 0,35 ≤ 1,0 µm, besonders bevorzugt D50 0,45 ≤ 0,65 µm auf. Die Primärkorngröße beeinflusst die Formgebung und die Sinteraktivität.

Nach dem Mahlen können auch weitere organische Hilfsstoffe zugegeben werden, die mit den genannten Bestandteilen gemischt werden.

Die vor bzw. nach dem Mahlen hinzuzufügenden organischen Hilfsstoffe können Dispergatoren, Binder, Presshilfsmittel und/oder Plastifizierer sein. Die organischen Hilfsstoffe werden in einer Ausgestaltung in einer Menge von 1 bis 30 Gew.-% bezogen auf das Gewicht der anorganischen Rohstoffmischung zur pulverförmigen Rohstoffmischung oder der hergestellten Aufschlämmung gegeben.

Die hergestellte Mischung, die Aufschlämmung, umfassend die anorganischen und organischen Rohstoffe in einem Lösungsmittel/-gemisch werden in einer Ausgestaltung durch ein geeignetes Verfahren, wie z. B. Sprühtrocknen, einer Granulierung unterzogen.

Anschließend wird das Gemisch bzw. das Granulat in Form gebracht. Dabei sind alle Methoden zum in-Form-Bringen des Standes der Technik anwendbar. In einer bevorzugten Ausgestaltung wird das Granulat mittels Pressen, bevorzugt axialem Pressen, bei 50 bis 200 MPa in Form gebracht. In einer weiteren Ausgestaltung erfolgt die Formgebung mittels isostatischem Pressen.

Das Formen kann auch durch die Anwendung anderer Verfahren wie Spritzgießen, Extrusionsformen oder Schlickergießen erfolgen.

Das in Form gebrachte Gemisch der Ausgangsmaterialien wird anschließend entbindert und gesintert. In einer bevorzugten Ausgestaltung erfolgt das Sintern unter Schutzgas, wie z. B. Stickstoff und/oder Argon.

Üblicherweise erfolgt das Entbindern und Sintern in einer Heizvorrichtung. Die Gasatmosphäre beim Entbindern und Sintern ist in einer Ausgestaltung inert und umfasst N₂, Argon oder eine Mischung aus N₂ und anderen inerten Gasen, bevorzugt Ar.

Das Entbindern erfolgt bevorzugt bei 400 bis 800°C und dauert bevorzugt mindestens 5 min, bevorzugt 30 min, besonders bevorzugt 1 h bis maximal 100 h, bevorzugt maximal 50 h, besonders bevorzugt maximal 30 h.

Die genauen Gehalte der einzelnen Sialon-Phasenbestandteile und der Anteil sowie die Zusammensetzung der amorphen bzw. teilkristallinen Korngrenzphase werden durch die gewählten Sinterparameter eingestellt. Bei der Herstellung des Sinterformkörpers, beim Sintern der anorganischen Rohstoffmischung wird das Sinterhilfsmittel Yb₂O₃ u. a. zu Yb-Al-Granat, Yb₃Al₅O₁₂, umgewandelt und reichert sich in der amorphen oder teilkristallinen Korngrenzphase an. Dabei wird ein möglichst geringer Anteil an Yb-Al-Granat in der Korngrenzphase bevorzugt. Je niedriger der Anteil an Yb-Al-Granat in der Korngrenzphase des Sinterformkörpers, desto höher ist die Verschleiß- und Abriebsresistenz des Sinterformkörpers. In einer bevorzugten Ausgestaltung ist in der Korngrenzphase kein Yb-Al-Granat nachweisbar. Die Menge an Yb-Al-Granat wird über die Sinterparameter, wie z. B. die Sintertemperatur beeinflusst. Bei Sintertemperaturen bis zu 1950 °C werden geringere Anteile an Yb-Al-Granat erhalten, bei niedrigeren Sintertemperaturen wird ein höherer Anteil an Yb-Al-Granat erhalten (siehe auch Tabelle 2).

Bevorzugt beträgt der Anteil an Yb-Al-Granat in der Korngrenzphase weniger als 90 Gew.-%, besonders bevorzugt ≤ 50 Gew.-%, insbesondere bevorzugt ≤ 15 Gew.-% der Korngrenzphase bezogen auf die Menge der Korngrenzphase.

Bevorzugt beträgt der Anteil an Yb-Al-Granat ≤ 18 Gew.-%, besonders bevorzugt ≤ 10 Gew.-%, insbesondere bevorzugt beträgt der Anteil ≤ 5 Gew.-% des gesamten Sinterformkörpers.

Mit einer niedrigeren Sintertemperatur wird der Anteil an kristalliner Korngrenzphase, und damit auch der Anteil an Yb-Al-Granat in der Korngrenzphase erhöht. Zusätzlich führt eine zu niedrige Sintertemperatur zu einem weniger dichten Sinterformkörper mit erhöhter Porosität und daraus folgend auch geringerer Abriebsresistenz. Bevorzugt beträgt die Sintertemperatur daher mehr als 1600 °C.

Neben der Sintertemperatur wirkt sich auch die Abkühlgeschwindigkeit auf den Anteil an Yb-Al-Granat in der amorphen und/oder teilkristallinen Korngrenzphase aus. Je langsamer die Abkühlung erfolgt, desto höher ist der Anteil an Yb-Al-Granat. Bevorzugt ist die Abkühlgeschwindigkeit daher höher als 1000 °C in 14 h, besonders bevorzugt höher als 1000 °C in 12 h, insbesondere bevorzugt höher als 1000 ° in 10 h. Die Abkühlgeschwindigkeit ist in einer Ausgestaltung langsamer als 1000 °C in 4 h, bevorzugt liegt die Abkühlgeschwindigkeit im Bereich von 1000 °C in 4 - 8 h.

Das in Form gebrachte Gemisch der Ausgangsmaterialien wird bei einer Temperatur zwischen 1600 °C und 1950 °C, bevorzugt zwischen 1650 °C und 1900 °C, besonders bevorzugt zwischen 1750 °C und 1875 °C gesintert. Bei diesen Sintertemperaturen wird ein möglichst dichter Sinterformkörper erhalten (> 99 % der theoretischen Dichte) und der Anteil an Yb-Al-Granat ist möglichst gering.

Das Sintern erfolgt in einer bevorzugten Ausgestaltung in einem Gasdruck-Sinterofen unter einem Druck von mindestens 10 bar, bevorzugt mindestens 50 bar, besonders bevorzugt mindestens 75 bar und bevorzugt maximal 150 bar, besonders bevorzugt maximal 100 bar.

Die Sinterdauer beträgt bevorzugt mindestens 30 min und bevorzugt maximal 3 h, besonders bevorzugt beträgt die Sinterdauer 45 min bis 2,5 h.

Der final gesinterte Sialon-Sinterformkörper kann anschließend entnommen werden. Eine Endbearbeitung erfolgt nach den im Stand der Technik bekannten Methoden. In einer Ausgestaltung wird der Sinterformkörper durch Schleifen zu Wendeschneidplatten oder Vollschaftfräsern weiterverarbeitet. Der erfindungsgemäße Sinterformkörper lässt sich zu einem Schneidmittel verarbeiten, das nur wenig mit dem zu bearbeitenden Werkstückstoff, z. B. Nickel-Basis-Legierungen oder Stählen, reagiert. Für die spanende Bearbeitung von Ni-Basis-Legierungen werden chemisch beständige, harte Schneidstoffe benötigt. Die Legierungen sind hoch-hitzeresistent und hart, es entstehen sehr hohe Temperaturen beim Zerspanen, was bei konventionellen Schneidstoffen zu Reaktionen und schnellem Verschleiß führt. Bei der spanenden Bearbeitung von Nickel-Basis-Legierungen oder Heat Resistant Super Alloys (HRSA) entsteht keine Aufbauschneide, d.h. der Werkstoff des zu bearbeitenden Werkstücks haftet kaum bis gar nicht am Schneidmittel an. Zusätzlich führt der hohe Anteil an 15R-Sialon-Polytypoid zu einem chemisch sehr beständigen Sinterformkörper.

Die vorliegende Erfindung betrifft einen Sinterformkörper auf Basis von β-Sialon sowie 15R-Sialon, der als Schneidwerkstoff eine hohe Schneidperformance ggü. Werkstücken aus Nickel-Basis-Legierung oder Heat Resistant Super Alloys (HRSA) aufweist. Dazu wird ein keramischer Sinterformkörper gezeigt, der eine Sialon-Phase und eine amorphe oder teilkristalline Korngrenzphase aufweist. Die Sialon-Phase weist einen Anteil von 20 - 80 Gew.-% 15R-Sialon-Polytypoid auf. Die amorphe oder teilkristalline Korngrenzphase umfasst ggf. einen Yb-Al-Granat, und macht bis zu 15 Gew.-% des gesamten Sinterformkörpers aus. Der Sinterformkörper wird aus einer anorganischen Rohstoffmischung hergestellt, die 40 bis 57 Gew.-% Si₃N₄; 40 - 55 Gew.-% eines Gemischs aus AIN und Al₂O₃, wobei das Verhältnis von Al₂O₃ zu AIN im Bereich 1 - 1,5:1 liegt, und 3 bis 5 Gew.-% Yb₂O₃ als Sinterhilfsmittel umfasst.

### Ausführungsbeispiele:

Folgende anorganische Rohstoffmischungen (RM) wurden für die Synthese von Sinterformkörpern bereitgestellt.

**Tab. 1 Zusammensetzung der anorganischen Rohstoffmischung**

| | **[Gew.-%]** | | | | |
|---|---|---|---|---|---|
| | **Si₃N₄** | **Al₂O₃** | **AlN** | **Yb₂O₃ ([mol%])** | **Y₂O₃** |
| **RM SdT** | 48,8 | 24,1 | 23,1 | - | 4,0 |
| **RM 1** | 48,8 | 24,1 | 23,1 | 4,0 (0,9) | - |
| **RM 3** | 51,9 | 25,5 | 18,3 | 4,2 (1,0) | - |
| **RM 4** | 50,1 | 24,6 | 21,1 | 4,1 (0,9) | - |

Die Ausgangsmaterialien, siehe Tab. 1, wurden vermischt. Si₃N₄ mit einem α-Si₃N₄-Gehalt von > 95 % , einem mittleren Korndurchmesser > 0,45 µm und einem Sauerstoff-Gehalt von 1,2 - 1,4 Gew.-% sowie Yb₂O₃ mit einer Reinheit > 99,9 %, einem mittleren Korndurchmesser von ca. 5 µm, Al₂O₃ mit einer Reinheit > 99,9 %, einem mittleren Korndurchmesser von 0,3 µm und AIN mit einem Sauerstoff-Gehalt von 0,6 - 1 % und durchschnittlichem Korndurchmesser 1,2 - 1,7 µm werden abgewogen, mit Wasser versetzt und für min. 30 min in einer Rührwerkskugelmühle gemahlen. Anschließend erfolgt die Zugabe der organischen Komponenten. Der so erhaltene keramische Schlicker (Aufschlämmung) wird mittels Sprühtrocknung granuliert. Formkörper wurden bei einem Pressdruck von ca. 1000 bar axial gepresst und bei 500 °C für 2 h entbindert. Die anschließende Sinterung erfolgte nach den Parametern aus Tabelle 2.

Die gesinterten Formkörper wurden zu Schneidplatten geschliffen.

**Tab. 2 Zusammensetzung und Eigenschaften der Sinterformkörper**

| | Sintertemp. [°C] | Haltezeit [h] | 15R* [Gew.-%] | β-Sialon* [Gew.-%] | Yb-Al-Granat [Gew.-%]** | Härte [GPa] | K_{\|c} [*MPa* ∗ *m*^0,5] | Eignung*** |
|---|---|---|---|---|---|---|---|---|
| RM 1 | 1650 | 1 | 46 | 49 | 5 | 15,1 | 4,9 | + |
| | 1800 | 1 | 47 | 53 | 0 | 14,7 | 5,1 | +++ |
| | 1850 | 1 | 47 | 53 | 0 | 14,7 | 4,8 | +++ |
| | 1875 | 1 | 57 | 43 | 0 | n. b. | n. b. | +++ |
| RM 4 | 1850 | 1 | 30 | 70 | 0 | n. b. | n. b. | ++ |
| RM 3 | 1850 | 1 | 19 | 81 | 0 | n. b. | n. b. | + |

| | | | | | | | | |
|---|---|---|---|---|---|---|---|---|
| * die Angabe bezieht sich auf den Anteil an der Sialon-Phase und wurde bestimmt mittels Rietveld-Verfeinerung, Topas Vers. 4.2, cif-files 00-048-1616, 00-042-0160, 00-023-1476 ** die Angabe "Yb-Al-Granat" bezieht sich auf das Gewicht der Korngrenzphase ***Resultate aus Experimenten zum Zerspanen von Nickel-Basis-Legierungen (Inconel 718) | | | | | | | | |

Die Bestimmung der Messwerte erfolgte gemäß den folgenden Normvorgaben: RFA: DIN 51001 (2003-08), DIN 51418-1 (2010-05), DIN 51418-2 (2015-03); XRD: DIN EN 13925-1 (2003-07), DIN 13925-2 (2003-07); Dichte: DIN EN 623-2 (1993-11), ISO 18754 (2020-04); Härte: DIN EN 843-3 (2005-08), ISO 14705 (2016-12), ASTM C 1327 (2015); Bruchzähigkeit: ISO 14627 (2012-07)

## Patentansprüche

1. Anorganische Rohstoffmischung umfassend:
- 40 - 57 Gew.-% Si₃N₄
- 40 - 55 Gew.-% eines Gemischs aus AIN und Al₂O₃, wobei das Verhältnis von Al₂O₃ zu AIN im Bereich 1 - 1,5:1 liegt
- 3 - 5 Gew.-% Yb₂O₃.

2. Rohstoffmischung gemäß Anspruch 1, wobei die Summe der anorganischen Bestandteile 100 Gew.-% ergibt.

3. Rohstoffmischung nach Anspruch 1 oder 2 wobei das Verhältnis von Al₂O₃ zu AIN 1 - 1,25:1, bevorzugt 1 - 1,12:1 beträgt.

4. Rohstoffmischung nach einem der vorstehenden Ansprüche, umfassend
- 45 - 54,5 Gew.-% Si₃N₄,
- 42 - 50 Gew.-% eines Gemischs aus AIN und Al₂O₃,
- 3,5 - 5 Gew.-% Yb₂O₃

5. Rohstoffmischung nach einem der vorstehenden Ansprüche, umfassend
- 47,5 - 51,5 Gew.-% Si₃N₄,
- 45 - 48 Gew.-% eines Gemischs aus AIN und Al₂O₃,
- 3,5 - 4,5 Gew.-% Yb₂O₃

6. Keramischer Sinterformkörper, umfassend
eine Sialon-Phase umfassend β-Sialon und 15R-Sialon, wobei der Anteil an 15-R-Sialon-Polytypoid 20 - 80 Gew.-% der Sialon-Phase beträgt, sowie eine amorphe oder teilkristalline Korngrenzphase, wobei die Korngrenzphase bis zu 15 Gew.-% des gesamten Sinterformkörpers ausmacht.

7. Keramischer Sinterformkörper nach Anspruch 6, wobei der Anteil an 15R-Sialon-Polytypoid 30 - 70 Gew.-%, bevorzugt 40 - 60 Gew.-% bezogen auf das Gesamtgewicht der Sialon-Phase beträgt.

8. Keramischer Sinterformkörper nach Anspruch 6 oder 7, wobei die Sialon-Phase zusätzlich bis zu 10 Gew.-% 12H-, 21R-, 27R- oder α-Sialon enthält.

9. Keramischer Sinterformkörper nach Anspruch 8, wobei die Sialon-Phase zusätzlich bis zu 5 Gew.-% 12H-, 21R-, 27R- oder α-Sialon enthält.

10. Verfahren zur Herstellung des gesinterten Sinterformkörpers gemäß einem der Ansprüche 8 bis 9, mit den Verfahrensschritten:
(a) Bereitstellen einer Rohstoffmischung gemäß einem der Ansprüche 1 bis 7
(b) Zugabe eines oder mehrerer organischer Hilfsstoffe
(c) Mischen und Mahlen der Rohstoffe, bevorzugt in mindestens einer Flüssigkeit ausgewählt unter Wasser und/oder mindestens einem organischen Lösungsmittel und ggf. Zugabe eines oder mehrerer weiterer organischer Hilfsstoffe
(d) In-Form-Bringen des Gemischs
(e) Entbindern und Sintern
(f) Entnahme des gesinterten Sinterformkörpers

11. Verfahren gemäß Anspruch 10, wobei das Sintern in Verfahrensschritt (e) bei 1600 °C bis 1950 °C, bevorzugt zwischen 1650 °C und 1900 °C, besonders bevorzugt bei 1750 °C bis 1875 °C durchgeführt wird.

12. Verfahren nach Anspruch 10 oder 11, wobei die wobei die Gasatmosphäre ausgewählt ist unter N₂ und/oder einem Schutzgas, bevorzugt ausgewählt unter N₂ oder einem Gemisch aus N₂ und Ar.

13. Verfahren gemäß einem der Ansprüche 10 bis 11, wobei das Sintern bei einem Druck zwischen 10 und 100 bar stattfindet.

14. Verwendung des keramischen Sinterformkörpers nach einem der Ansprüche 6 bis 9 als Schneidmittel, bevorzugt als Wendeschneidplatte oder Vollschaftfräser.
